# EUROPÄISCHE PATENTSCHRIFT

(11) **EP 1 438 359 B1**
(45) Veröffentlichungstag und Bekanntmachung des Hinweises auf die Patenterteilung: **22.02.2006**
(21) Anmeldenummer: 02774659.3
(22) Anmeldetag: 27.09.2002
(51) Int. Cl.: C09C 1/00

(54) **PIGMENT MIT METALLGLANZ**
PIGMENT WITH A METALLIC LUSTRE
PIGMENT A ECLAT METALLIQUE

(30) Priorität: 27.10.2001 DE 10153197
(43) Veröffentlichungstag der Anmeldung: 21.07.2004
(73) Patentinhaber: Merck Patent GmbH, 64293 Darmstadt (DE)
(72) Erfinder: PFAFF, Gerhard, 64839 Münster (DE); ANDES, Stephanie, 63452 Hanau (DE); UHLIG, Michael, 64297 Darmstadt (DE)
(86) Internationale Anmeldenummer: PCT/EP2002/010863
(87) Internationale Veröffentlichungsnummer: WO 2003/037992

(56) Entgegenhaltungen:
- EP-A- 0 353 544
- EP-A- 0 960 915
- DATABASE CA [Online] CHEMICAL ABSTRACTS SERVICE, COLUMBUS, OHIO, US; WATANABE, AKIRA ET AL: "Pigment composition having metal luster" retrieved from STN Database accession no. 84:46195 CA XP002227100 & JP 50 019127 B (NIHON KOKEN KOGYO K. K., JAPAN) 4. Juli 1975 (1975-07-04)
- ITO S ET AL: "NICKEL COATING ON TO GLASS FLAKES" WORLD SURFACE COATINGS ABSTRACTS, (PAINT RESEARCH ASS.) PERGAMON PRESS LTD. OXFORD, GB, Bd. 69, Nr. 654, 1. Dezember 1996 (1996-12-01), Seite 2104 XP000682401 ISSN: 0043-9088

## Beschreibung

Die Erfindung betrifft ein Effektpigment, das aus einem plättchenförmigen, nichtmetallischen Substrat und einer Metallschicht besteht, die das Substrat vollständig umhüllt. Gegenstand der Erfindung ist weiterhin ein Verfahren zur Herstellung des Pigmentes sowie dessen Verwendung.

Metalleffektpigmente werden seit Jahrzehnten in Beschichtungen zur Erzeugung des Metalleffektes eingesetzt. Sie bestehen aus plättchenförmigen Metallpartikeln, deren optische Wirkung auf der gerichteten Reflexion an den überwiegend flächig ausgebildeten und im jeweiligen Anwendungsmedium parallel ausgerichteten Metallteilchen beruht.

Aus historischen Gründen werden Metalleffektpigmente häufig noch als "Bronzen" bezeichnet. Es handelt sich jedoch nicht um Bronzen im metallurgischen Sinn, sondern um Aluminiumpigmente (Silberbronze), Kupfer- und Kupfer/Zink-Pigmente (Goldbronzen) und Zinkpigmente (Roempp Lexikon - Lacke und Druckfarben, Georg Thieme Verlag 1998, S. 378).

Hauptanwendungsgebiete der Metalleffektpigmente sind die Automobil- und die Druckindustrie. Daneben werden sie auch für die Einfärbung von Kunststoffen und Anstrichmitteln, für Lederbeschichtungen, in der Kosmetik und in der Keramikindustrie eingesetzt. Im Autolackbereich werden sie vor allem für die Erzeugung des Metallic-Effektes verwendet, wobei sie zumeist gemeinsam mit anderen Pigmenten wie Perlglanzpigmenten, Titandioxid, Ruß oder organischen Pigmenten im Lack appliziert werden.

Mit Metallic- oder Metall-Effekt wird ein Effekt bezeichnet, der zum Beispiel in Lacken, Druckfarben und Kunststoffen durch Reflexion des Lichtes an plättchenförmigen Metallpartikeln hervorgerufen wird. Kriterien für diesen Effekt sind die Brillanz (Sparkle-Effekt), der Flop (Helligkeitsflop), die Abbildeschärfe (DOI), das metallische Färbevermögen und das Deckvermögen. Der Metalleffekt ist abhängig vom Formfaktor (Verhältnis mittlerer Teilchendurchmesser zu mittlerer Teilchendicke) der Pigmente sowie von der Qualität der Pigmentoberfläche, der Partikelgröße, der Teilchengrößenverteilung und insbesondere von der Pigmentorientierung parallel zur Oberfläche im Lack bzw. Druckfarbenfilm. Größere Teilchen führen durch erhöhte Lichtreflexion zu einem erhöhten Glitzereffekt, während kleinere Teilchen ein höheres Deckvermögen bewirken.

Darüber hinaus besteht ein Bedarf an Pigmenten, die Anwendungssystemen, wie Lacken, Kunststoffen und Druckerzeugnissen, ein Aussehen verleihen, das mit der Oberfläche von flüssigen Metallen vergleichbar ist. Dieser gewünschte Effekt wird auch mit "Liquid Metal Effect" bezeichnet.

Traditionelle Aluminium-Pigmente, die durch mechanische Verfahren ausgehend von Aluminium-Grieß hergestellt werden, erfüllen diese Anforderungen nicht. Je nach Ausgangsmaterial und Mahltechnik werden ungleichförmige Aluminiumplättchen mit einem hohen Streuanteil oder eher runde Aluminiumplättchen erhalten. Die runden Plättchen (sog. Silberdollars) können wegen ihres geringen Streuanteils zur Erzielung verbesserter metallischer Glanzeffekte eingesetzt werden. Silberdollars werden zum Beispiel unter der Bezeichnung Stapa® Metallux 2000 von der Firma Eckart angeboten.

Eine Weiterentwicklung stellen die über PVD-Verfahren (Physical Vapour Deposition) hergestellten besonders dünnen Aluminiumplättchen dar, die in US 3 949 139 und US 4 321 087 näher beschrieben werden. Während übliche Aluminium-Pigmente Plättchendicken über 100 nm besitzen, weisen PVD-Pigmente, beispielsweise die Type Metallure® der Firma Eckart, Dicken von deutlich unter 100 nm auf. Mit den PVD-Aluminium-Pigmenten sind im Vergleich zu den herkömmlichen Aluminiumpigmenten verbesserte Glanzeffelle erzielbar (J. Seubert, High Performance Pigments Conference, Miami Beach, 1999).

Ihre Anwendung erfordert jedoch ein sehr spezielles anwendungstechnisches Know-how, um reproduzierbare Effekte zu erzielen.
Andernfalls treten bei der Applikation der Pigmente Probleme auf. So können sie infolge ihrer geringen mechanischen Stabilität bei der Einarbeitung in Anwendungssysteme, beispielsweise Lacke oder Kunststoffe, nur geringen Scherkräften ausgesetzt werden. Zudem ist ihre Verwendung in wasserbasierenden Anwendungssystemen wegen der herstellungsbedingten großen reaktiven Oberfläche problematisch. Für bestimmte Anwendungen sind sie darüber hinaus Oberhaupt nicht geeignet, beispielsweise für die Pulverlackierung.

Es ist deshalb Aufgabe der Erfindung, ein Pigment bereitzustellen, das in allen Anwendungssystemen, wie Lacken, Kunststoffen und Druckerzeugnissen einsetzbar ist und diesen das Aussehen von flüssigen Metallen verteiht, ohne die oben angeführten Nachteile der PVD-Aluminium-Pigmente zu besitzen.

Diese Aufgabe wird gemäß der Erfindung gelöst durch ein Pigment, umfassend ein plättchenförmiges, nichtmetallisches Substrat mit einer Dicke von kleiner als 200 nm, das mit einer Metallschicht vollständig umhüllt ist, welche eine Dicke von 10 bis 100 nm aufweist.

Weiterhin wird diese Aufgabe gelöst durch ein Verfahren zur Herstellung des Pigmentes, indem das Substrat in einem wässrigen und/oder Lösemittel enthaltenden Medium in Anwesenheit einer Metallverbindung suspendiert und nach Zugabe eines Reduktionsmittels die Metallschicht auf dem Substrat abgeschieden wird.

Diese Aufgabe wird weiterhin gelöst durch ein Verfahren zur Herstellung des Pigmentes, indem das in einem Wirbelbett fluidisierte Substrat mit Metallen beschichtet wird, die durch Gasphasenzersetzung der entsprechenden flüchtigen Metallverbindungen erhalten werden.

Schließlich wird diese Aufgabe gelöst durch ein Verfahren zur Herstellung des Pigmentes, indem im Hochvakuum durch Sputtem oder thermisches Verdampfen die entsprechenden Metalle auf dem Substrat abgeschieden werden, wobei das Substrat während des Beschichtungsvorgangs gleichmäßig in Bewegung gehalten wird.

Gegenstand der Erfindung ist weiterhin die Verwendung der erfindungsgemäßen Pigmente in Farben, Lacken, Druckfarben, Kunststoffen, kosmetischen Formulierungen, keramischen Materialien, Gläsern, Papier, zur Lasermarkierung von Kunststoffen, in Sicherheitsanwendungen sowie in Trockenpräparaten und Pigmentpräparationen.

Als Substrat für die erfindungsgemäßen Pigmente werden plättchenförmige, nichtmetallische Materialien eingesetzt, die eine besonders glatte Oberfläche besitzen und deren Dicke kleiner als 200 nm, bevorzugt kleiner 150 nm ist. Dabei werden Einkristalle aus Aluminiumoxid, Bismutoxidchlorid und basischem Bleicarbonat sowie SiO₂-Flakes und TiO₂-Flakes, aber auch Glasflakes, bevorzugt. Besonders bevorzugt sind Aluminiumoxid und Bismutoxidchlorid, da beide über äußerst glatte Oberflächen verfügen und kostengünstig hergestellt werden können.

Die SiO₂-Flakes werden zum Beispiel gemäß der internationalen Anmeldung WO 93/08237 auf einem endlosen Band durch Hydrolyse einer Wasserglaslösung hergestellt. Die TiO₂-Flakes können beispielsweise nach dem in WO 97/43346 beschriebenen Verfahren hergestellt werden.

Die Herstellung von manokristallinen Bismutoxidchtoridsubstraten erfolgt durch kontrollierte Fällungsreaktion aus wässrigen Bismutsalzlösungen. Größe, Dicke und Kristallform lassen sich durch die Fällungsbedingungen und die Zugabe spezieller Additive beeinflussen. Bismutoxidchlorid ist selbst ein Pigment und seit längerer Zeit im Handel erhältlich.

Substrate aus Aluminiumoxid sind ebenfalls über verschiedene bekannte Verfahren herstellbar, wie sie zum Beispiel in JP-A-57-111239, JP4039362 oder JP3072572B beschrieben sind.
Bevorzugt-werden die in US 5,702,519 offenbarten Aluminiumoxidsubstrate eingesetzt, welche neben einem Hauptanteil an Al₂O₃ auch einen geringen Anteil Titanoxid enthalten. Besonders bevorzugt sind jedoch die als Alumina-Flakes bezeichneten Substrate, deren Herstellung in Eur. Coat. J., 04/99, S.90-98, beschrieben ist.

Als Glasflakes sind alle nach den üblichen Verfahren hergestellten Glasflakes verschiedener Zusammensetzung geeignet, so lange sie die erforderliche Dicke aufweisen.

Die Größe der Substratteilchen ist an sich nicht kritisch. Üblicherweise liegt der mittlere Durchmesser im Bereich von 1 bis 250 µm, vorzugsweise 2 bis 200 µm und insbesondere 5 bis 50 µm.

Der Formfaktor der Substratteilchen ist größer als 20 und bevorzugt zwischen 50 und 300.

Für die das Substrat umhüllende Metallschicht sind Metalle geeignet, die ein besonders starkes Reflexionsvermögen besitzen. Bevorzugt werden Aluminium, Titan, Chrom, Nickel, Silber, Zink, Molybdän. Tantal, Wolfram, Palladium, Kupfer, Gold, Platin oder diese enthaltende Legierungen, beispielsweise Hastelloy verwendet Besonders bevorzugt sind Aluminium und Silber.

Die Dicke der Metallschicht liegt zwischen 10 und 100 nm. Sie wird bevorzugt auf 20 bis 50 nm eingestellt.

Die Metallschicht kann nasschemisch nach bekannten Verfahren durch Reduktion anorganischer oder organischer Metallverbindungen aufgebracht werden. Sie kann aber auch durch ein CVD-Verfahren (Chemical Vapour Deposition), beispielsweise die Gasphasenzersetzung von Metallcarbonylen oder durch ein PVD-Verfahren, beispielsweise durch Sputtem oder Aufdampfen von Metallen, abgeschieden werden.

Bei der nasschemischen Abscheidung der Metallschicht wird das Substrat in einem wässrigen und/oder Lösemittel enthaltenden Medium in Anwesenheit einer Metallverbindung suspendiert und nach Zugabe eines Reduktionsmittels das Metall auf dem Substrat abgeschieden. Die Metallverbindung kann eine anorganische Verbindung, zum Beispiel Silbernitrat oder eine metallorganische Verbindung, beispielsweise Nickelacetylacetonat sein. Das zu verwendende Lösungsmittel wird durch die Löslichkeit der metallorganischen Verbindung bestimmt.

Das in US 3 536 520 beschriebene Verfahren arbeitet mit Nickelchlorid in wässriger Phase, wobei das Substrat (Glimmer) einer Vorbehandlung mit Zinn- und Palladiumchlorid unterzogen wird. Als Reduktionsmittel wird Hypophosphit verwendet.

In EP 0 353 544 werden als Reduktionsmittel für die nasschemische Metallabscheidung reduzierende Verbindungen, wie Aldehyde (Formaldehyd, Acetaldehyd, Benzaldehyd), Ketone (Aceton), Carbonsäuren und deren Salze (Weinsäure, Ascorbinsäure), Reductone (Isoascorbinsäure, Triosereducton, Reduktinsäure) und reduzierende Zucker (Glucose) genannt. Aber auch reduzierende Alkohole (Allylalkohol), Polyole und polyphenole, Sulfite, Hydrogensulfite, Dithionite, Hypophosphite, Hydrazin, Borstickstoffverbindungen, Metallhydride und komplexe Hydride von Aluminium und Bor können verwendet werden.

Weiterhin kann die Abscheidung der Metallschicht mit Hilfe eines CVD-Verfahrens erfolgen. Derartige Verfahren sind bekannt. Bevorzugt werden hierfür Wirbelschichtreaktoren eingesetzt. EP 0 741 170 beschreibt die Abscheidung von Aluminiumschichten durch Reduktion von Aluminiumalkylen mit Kohlenwasserstoffen in einem Inertgasstrom. Weiterhin können die Metallschichten durch Gasphasenzersetzung der entsprechenden Metallcarbonyle in einem beheizbaren Wirbelschichtreaktor, wie er in EP 045 851 beschrieben ist, abgeschieden werden. Nähere Angaben zu diesem Verfahren sind in WO 93/12182 enthalten.

Ein weiteres Verfahren zur Abscheidung dünner Metallschichten, das im vorliegenden Falle für das Aufbringen der Metallschicht auf dem Substrat anwendbar ist, ist das bekannte Verfahren zum Aufdampfen von Metallen im Hochvakuum. Es ist in Vakuum-Beschichtung, Bände 1-5; Herausgeber Frey, Kienel und Löbl, VDI-Verlag 1995 ausführlich beschrieben.

Zur Herstellung der erfindungsgemäßen Glanzpigmente ist eine Anpassung des Hochvakuumbedampfungsverfahrens an das in Pulverform vorliegende Substrat unbedingt erforderlich. Dazu ist es notwendig, das Substrat während des Bedampfungsverfahrens im Vakuumkessel gleichmäßig in Bewegung zu halten, um eine homogene Beschichtung aller Partikeloberflächen zu gewährleisten.

Dies gelingt zum Beispiel durch den Einsatz von rotierenden Behältern oder die Verwendung von Vibrationsvorrichtungen.

Beim Sputterverfahren wird zwischen dem Träger und dem Beschichtungsmaterial, das in Form von Platten (Target) vorliegt, eine Gasentladung (Plasma) gezündet. Das Beschichtungsmaterial wird durch energiereiche lonen aus dem Plasma, z.B. Argonionen, beschossen und dadurch abgetragen bzw. zerstäubt. Die Atome oder Moleküle des zerstäubten Beschichtungsmaterials werden auf dem Träger niedergeschlagen und bilden die gewünschte dünne Schicht.

Für Sputterverfahren eignen sich besonders Metalle oder Legierungen. Diese können mit vergleichsweise hohen Geschwindigkeiten, insbesondere im sogenannten DC-Magnetron-Verfahren, zerstäubt werden.

Letzteres wird in der vorliegenden Erfindung für das Aufbringen der Metallschicht auf den Substratpartikeln besonders bevorzugt.

Das Sputterverfahren ist beschrieben in Vakuum-Beschichtung, Bände 1-5; Herausgeber Frey, Kienel und Löbl, VDI-Verlag 1995.

Für den Einsatz in Außenanwendungen, insbesondere bei der Applikation in Fahrzeuglackierungen, können die erfindungsgemäßen Pigmente mit einer zusätzlichen wetterstabilisierenden Schutzschicht, der sogenannten Nachbeschichtung, versehen werden, die gleichzeitig eine optimale Adaption an das Bindemittelsystem bewirkt. Derartige Nachbeschichtungen sind beispielsweise in EP 0 268 918 und EP 0 632 109 beschrieben worden.

Gegenüber den PVD-Aluminium-Pigmenten haben die erfindungsgemäßen Pigmente eine Reihe von Vorteilen, die in erheblichem Maße auf die ver wendeten Substrate zurückzuführen sind. Diese bewirken eine deutlich bessere mechanische Stabilität, was sowohl in einer geringen Biegsamkeit als auch in einer geringen Brüchigkeit der Pigmente zum Ausdruck kommt. Außerdem können sich die erfindungsgemäßen Pigmente im Anwendungssystem besser orientieren.
Darüber hinaus bleibt die ideal glatte Oberfläche der Substratteilchen auch nach deren Metallisierung erhalten, so dass die entstehenden Pigmente perfekte Oberflächen aufweisen. Außerdem sind sie so dünn, dass sie als Einzelpartikel im Anwendungssystem nicht mehr wahrgenommen werden, da an den Kanten keine unerwünschten Streuzentren mehr auftreten. Diese vorteilhaften Eigenschaften führen in ihrer Gesamtheit dazu, dass der gewünschte "Liquid Metal Effect" beobachtet werden kann.
Außerdem sind die beschriebenen Verfahren zur Herstellung der erfindungsgemäßen Pigmente einfach und vergleichsweise kostengünstig durchführbar.

Die erfindungsgemäßen Pigmente sind mit einer Vielzahl von Farbsystemen kompatibel, vorzugsweise im Bereich der Lacke, Farben und Druckfarben. Sie sind ebenfalls für die Lasermarkierung von Papier und Kunststoffen sowie in keramischen Materialien und für Anwendungen im Agrarbereich einsetzbar. Aufgrund ihrer besonderen Effekte sind sie jedoch insbesondere für den Automobilbereich, die Druckindustrie sowie die dekorative Kosmetik geeignet. Sie können ebenfalls bei der Herstellung von Pigmentpräparationen und Trockenpräparaten eingesetzt werden, welche insbesondere in Druckfarben und Lacken Verwendung finden. Ein bevorzugtes Einsatzgebiet ist auch der Sicherheitsbereich mit verschiedenen Anwendungen, zum Beispiel in Geldscheinen, Kreditkarten, Visa, für Steuerbanderolen oder dergleichen.

Obwohl die erfindungsgemäßen Pigmente selbst über exzellente Eigenschaften verfügen, können sie selbstverständlich auch in Abmischung mit den verschiedensten handelsüblichen Pigmenten, beispielsweise organischen oder anorganischen Farbstoffen, herkömmlichen transparenten, bunten, schwarzen oder weißen Pigmenten wie zum Beispiel metalloxidbeschichteten Glimmerpigmenten, mit holographischen Pigmenten, LCPs (Liquid Crystal Polymers) oder herkömmlichen Metallpigmenten verwendet werden. Außerdem können sie in jedem Verhältnis mit handelsüblichen Pigmenten und Füllstoffen und/oder Bindemitteln gemischt werden.

Die vollständige Offenbarung aller vorstehend genannten Patentanmeldungen, Patente und Veröffentlichungen ist durch Bezugnahme in dieser Anmeldung enthalten.

Die nachfolgenden Beispiele sollen die Erfindung näher erläutern, ohne sie jedoch zu beschränken.

### Beispiele

### Beispiel 1

100g Bismutoxidchloridplättchen (Schichtdicke ca. 50-70 nm) werden 30min mit 150ml einer Aktivierungslösung behandelt, die 1,7g Sn(II)chlorid und 10ml konzentrierte Salzsäure enthält. Danach wird das Material abgesaugt und mit voll entsalztem Wasser (VE-Wasser) gewaschen. Eine Silbemitratlösung wird hergestellt, indem 15g Silbernitrat in 500ml VE-Wasser gelöst werden. Dann gibt man 3ml konzentrierten Ammoniak hinzu und löst in dieser Lösung 0,6g NaOH auf.
Eine Reduktionslösung wird hergestellt, indem 10g Glucose in 300 ml VE-Wasser gelöst werden. Dazu gibt man 1ml verdünnte Salpetersäure und füllt mit VE-Wasser auf 500ml auf.
Zur Beschichtung werden die aktivierten Bismutoxidchloridplättchen in 100ml VE-Wasser aufgeschlämmt. Silberlösung und Reduktionslösung werden nacheinander zugegeben und die Reaktionsmischung wird unter Rühren auf 50°C erwärmt.
Nach einer Stunde Reaktionszeit lässt man das Material absitzen und filtriert dann ab. Nach dem Waschen mit Wasser und Ethanol werden die silberbeschichteten Bismutoxidchloridplättchen bei 110°C getrocknet.

### Beispiel 2

In einer Hochvakuumverdampfungsanlage mit Magnetronkathode werden 200g Siliciumdioxidplättchen (Schichtdicke ca. 100nm) in die Substratvorrichtung gebracht. Nach dem Abpumpen der Beschichtungskammer auf 10⁻⁵ Torr lässt man Argon bis zu einem Druck von 10⁻³ Torr einströmen. Zunächst wird für 10min die Oberfläche des Aluminium-Targets durch lonenbeschuss gereinigt, wobei eine Blende das Pulver abdeckt. Anschließend wird bei ständiger Bewegung des Pulvers bei herausgeschwenkter Blende die Beschichtung mit Aluminium bei einem Arbeitsdruck von 10⁻³ Torr für die Dauer von ca. 120min, in Abhängigkeit von der gewünschten Schichtdicke, vorgenommen.

## Patentansprüche

1. Pigment mit Metallglanz, umfassend ein plättchenförmiges, nichtmetallisches Substrat mit einer Dicke von kleiner als 200 nm, das mit einer Metallschicht vollständig umhüllt ist, welche eine Dicke von 10 bis 100 nm aufweist.

2. Pigment gemäß Anspruch 1, wobei die Dicke des Substrates kleiner als 150 nm ist.

3. Pigment gemäß Anspruch 1 oder 2, wobei das Substrat aus Einkristallen von Aluminiumoxid, Bismutoxidchlorid oder basischem Bleicarbonat besteht.

4. Pigment gemäß Anspruch 1 oder 2, wobei das Substrat aus SiO₂-Flakes, TiO₂-Flakes oder Glasflakes besteht.

5. Pigment gemäß einem oder mehreren der Ansprüche 1 bis 4, wobei die Metallschicht aus Aluminium, Titan, Chrom, Nickel, Silber, Zink, Molybdän, Tantal, Wolfram, Palladium, Kupfer, Gold, Platin oder diese enthaltenden Legierungen besteht.

6. Verfahren zur Herstellung des Pigmentes gemäß Anspruch 1, indem das Substrat in einem wässrigen und/oder Lösemittel enthaltenden Medium in Anwesenheit einer Metallverbindung suspendiert und nach Zugabe eines Reduktionsmittels die Metallschicht auf dem Substrat abgeschieden wird.

7. Verfahren zur Herstellung des Pigmentes gemäß Anspruch 1, indem das in einem Wirbelbett fluidisierte Substrat mit Metallen beschichtet wird, die durch Gasphasenzersetzung der entsprechenden flüchtigen Metallverbindungen erhalten werden.

8. Verfahren zur Herstellung des Pigmentes gemäß Anspruch 1, indem im Hochvakuum durch Sputtern oder thermisches Verdampfen die entsprechenden Metalle auf dem Substrat abgeschieden werden, wobei das Substrat während des Beschichtungsvorgangs gleichmäßig in Bewegung gehalten wird.

9. Verwendung des Pigmentes gemäß den Ansprüchen 1 bis 5 in Farben, Lacken, Druckfarben, Kunststoffen, kosmetischen Formulierungen, keramischen Materialien, Gläsern, Papier, zur Lasermarkierung, in Sicherheitsanwendungen sowie in Trockenpräparaten und Pigmentpräparationen.

10. Farben, Lacken, Druckfarben, Kunststoffe, kosmetische Formulierungen, keramische Materialien, Gläser, Papier, Trockenpräparate, Pigmentpräparationen und Materialien für Sicherheitsanwendungen, enthaltend ein Pigment gemäß einem oder mehreren der Ansprüche 1 bis 5.

## Claims

1. Pigment having a metallic lustre, comprising a flake-form, non-metallic substrate having a thickness of less than 200 nm which is completely enveloped by a metal layer having a thickness of 10 to 100 nm.

2. Pigment according to Claim 1, where the thickness of the substrate is less than 150 nm.

3. Pigment according to Claim 1 or 2, where the substrate consists of single crystals of aluminium oxide, bismuth oxide chloride or basic lead carbonate.

4. Pigment according to Claim 1 or 2, where the substrate consists of SiO₂ flakes, TiO₂ flakes or glass flakes.

5. Pigment according to one or more of Claims 1 to 4, where the metal layer consists of aluminium, titanium, chromium, nickel, silver, zinc, molybdenum, tantalum, tungsten, palladium, copper, gold, platinum or alloys comprising these.

6. Process for the preparation of the pigment according to Claim 1 by suspending the substrate in an aqueous and/or solvent-containing medium in the presence of a metal compound and, after addition of a reducing agent, depositing the metal layer on the substrate.

7. Process for the preparation of the pigment according to Claim 1 by coating the substrate fluidised in a fluidised bed with metals obtained by gas-phase decomposition of the corresponding volatile metal compounds.

8. Process for the preparation of the pigment according to Claim 1 by depositing the corresponding metals on the substrate in a high vacuum by sputtering or thermal evaporation, where the substrate is kept uniformly in motion during the coating operation.

9. Use of the pigment according to Claims 1 to 5 in paints, coatings, printing inks, plastics, cosmetic formulations, ceramic materials, glasses, paper, for laser marking, in security applications and in dry preparations and pigment compositions.

10. Paints, coatings, printing inks, plastics, cosmetic formulations, ceramic materials, glasses, paper, dry preparations, pigment compositions and materials for security applications, comprising a pigment according to one or more of Claims 1 to 5.

## Revendications

1. Pigment présentant un lustre métallique, comprenant un substrat non métallique en forme de flocons présentant une épaisseur inférieure à 200 nm qui est complètement enveloppé par une couche en métal présentant une épaisseur de 10 à 100 nm.

2. Pigment selon la revendication 1, dans lequel l'épaisseur du substrat est inférieure à 150 nm.

3. Pigment selon la revendication 1 ou 2, dans lequel le substrat est constitué par des monocristaux d'oxyde d'aluminium, de chlorure d'oxyde de bismuth ou de carbonate de plomb basique.

4. Pigment selon la revendication 1 ou 2, dans lequel le substrat est constitué par des flocons de SiO₂, par des flocons de TiO₂ ou par des flocons de verre.

5. Pigment selon une ou plusieurs des revendications 1 à 4, dans lequel la couche métallique est constituée par de l'aluminium, du titane, du chrome, du nickel, de l'argent, du zinc, du molybdène, du tantale, du tungstène, du palladium, du cuivre, de l'or, du platine ou des alliages comprenant ces corps.

6. Procédé pour la préparation du pigment selon la revendication 1 en suspendant le substrat dans un milieu aqueux et/ou contenant un solvant en présence d'un composé métallique et, après ajout d'un agent réducteur, en déposant la couche métallique sur le substrat.

7. Procédé pour la préparation du pigment selon la revendication 1 en revêtant le substrat fluidisé dans un lit fluidisé à l'aide de métaux obtenus par décomposition en phase gazeuse des composés métalliques volatiles correspondants.

8. Procédé pour la préparation du pigment selon la revendication 1 en en déposant les métaux correspondants sur le substrat sous un vide poussé par pulvérisation ou évaporation thermique, où le substrat est maintenu de façon uniforme en mouvement pendant l'opération de revêtement.

9. Utilisation du pigment selon les revendications 1 à 5 dans des peintures, des revêtements, des encres d'impression, des matières plastiques, des formulations cosmétiques, des matériaux de céramique, des verres, du papier, pour un marquage laser, dans des applications de sécurité et dans des préparations à sec et des compositions de pigments.

10. Peintures, revêtements, encres d'impression, matières plastiques, formulations cosmétiques, matériaux de céramique, verres, papier, préparations à sec, compositions de pigments et matériaux pour des applications de sécurité, comprenant un pigment selon une ou plusieurs des revendications 1 à 5.
